# EUROPÄISCHE PATENTSCHRIFT

(11) **EP 0 987 539 B1**
(45) Veröffentlichungstag und Bekanntmachung des Hinweises auf die Patenterteilung: **29.08.2001**
(21) Anmeldenummer: 99124388.2
(22) Anmeldetag: 12.02.1997
(51) Int. Cl.: G01N 21/64

(54) **Messanordnung mit zumindest einer Strahlungsquelle zur bereitstellung einer anregungsstrahlung**
Measuring device with at least one excitation source
Système de mesure avec au moins une source d'excitation

(30) Priorität: 29.02.1996 AT 38396
(43) Veröffentlichungstag der Anmeldung: 22.03.2000
(62) Teilanmeldung aus: 97890024.9
(73) Patentinhaber: F. HOFFMANN-LA ROCHE AG, 4070 Basel (CH)
(72) Erfinder: Hartmann, Paul, Dipl.-Ing. Dr., 8160 Weiz (AT); Ziegler, Werner, Dipl.-Ing., 8043 Graz (AT); Karpf, Hellfried, Dr., 8043 Graz (AT); Harer, Johann, Dipl.-Ing. Dr., 8010 Graz (AT)
(74) Vertreter: Babeluk, Michael, Dipl.-Ing. Mag.

(56) Entgegenhaltungen:
- US-A- 4 703 182
- US-A- 4 810 658
- US-A- 5 418 371
- US-A- 5 424 841
- PATENT ABSTRACTS OF JAPAN vol. 013, no. 091 (P-837), 3. März 1989 (1989-03-03) & JP 63 273042 A (DAIKIN IND LTD), 10. November 1988 (1988-11-10)

## Beschreibung

Die Erfindung betrifft eine Meßanordnung mit zumindest einer Strahlungsquelle zur Bereitstellung einer Anregungsstrahlung, mit einem ersten lumineszenzoptischen Sensorelement, mit zumindest einem Detektor, einer Auswerteeinheit zur Detektion einer Meßstrahlung und einem für die Anregungs- und die Meßstrahlung transparenten Trägerelement, welches eine erste Grenzfläche zur Anbringung des lumineszenzoptischen Sensorelementes, eine zweite Grenzfläche zur Aufnahme der Anregungsstrahlung sowie eine dritte Grenzfläche zur Abgabe der Meßstrahlung des Sensorelementes an den Detektor aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex des Trägerelementes größer ist, als jener der Umgebung.

Eine Meßanordnung der eingangs genannten Art ist beispielsweise aus der AT-B 383 684 bekannt geworden. Ein transparentes Trägerelement dieser Meßanordnung mit planparallelen Begrenzungsflächen weist auf einer dieser Flächen eine Sensorschicht auf, wobei diese Sensorschicht von einer Strahlungsquelle mit Anregungsstrahlung beaufschlagt wird. Das Licht der Strahlungsquelle fällt durch eine Blendeneinrichtung auf die Sensorschicht, wobei die entstehende Meßstrahlung im wesentlichen normal zur Richtung der Anregungsstrahlung zu einem an einer seitlichen Begrenzungsfläche des Trägerelementes angeordneten Detektor abgeführt wird. Die Lichtleitung im Trägerelement erfolgt im wesentlichen durch Totalreflexion der Meßstrahlung an den Begrenzungsflächen des Trägerelementes. An der Begrenzungsfläche mit der Sensorschicht ist eine Meßgutkammer angeordnet, welche über einen Einlaß und einen Auslaß für die Probe verfügt und von der zu messenden Probe durchspült werden kann. Die Probe bzw. der zu vermessende Analyt in der Probe verändert eine optische Eigenschaft des Lumineszenzindikators in der Sensorschicht, wodurch sich die vom Detektor erfaßte Meßstrahlung in funktionaler Abhängigkeit von der Analytkonzentration ändert.

Aus der EP-B1 0 354 895 ist ein Einwegmeßelement zur gleichzeitigen Vermessung mehrerer unterschiedlicher Probenbestandteile bekannt, welches aus einem Sensorteil und einem damit verbundenen Probennahmeteil besteht. Der Sensorteil weist einen Probenkanal auf, in welchem mehrere Sensoren angeordnet sind. Die Anregung der Sensoren bzw. die Detektion der Meßstrahlung erfolgt über Lichtleiter zu jedem einzelnen der Sensoren, wobei die Auswertung der Lichtsignale in einer nicht weiter dargestellten Anregungs- und Meßeinrichtung erfolgt.

Aus der US-A 4 968 632 ist ein Verfahren und eine Vorrichtung für die rasche Analyse einer Probe bekannt. Eine Probenkammer mit transparenten, gegenüberliegenden Wänden ist an der Innenseite mit einem Lumineszenzindikator versehen, welcher in einer Indikatorschicht angeordnet ist. Die von mehreren Lichtquellen emittierte Anregungsstrahlung gelangt durch eine transparente Wand der Meßkammer auf die Probe, beispielsweise ein zu messendes Gas, welches mit der Indikatorschicht wechselwirkt. Im Bereich der Indikatorschicht sind mehrere Filter angeordnet, welche jeweils nur einen bestimmten Anteil der Meßstrahlung herausfiltern, wobei pro Filter eine Photodiode zur Erfassung der Meßstrahlung vorgesehen ist. Aufgrund charakteristischer Änderungen in den einzelnen Spektren kann dann auf die Meßgröße geschlossen werden.

Ein Sensorelement für die gleichzeitige Bestimmung der Konzentration mehrerer Substanzen in einer Probe wird auch in der US-A 5 039 490 beschrieben. In einem mehrschichtig aufgebauten Sensorelement befinden sich nebeneinander angeordnete photosensitive Elemente und lichtemittierende Quellen, welche durch eine transparente Koppelschicht abgedeckt sind. Auf dieser Koppelschicht befindet sich die Indikatorschicht, welche ihrerseits mit einer mit der Probe in Kontakt stehenden Deckschicht abgedeckt sein kann. Das relativ kompliziert aufgebaute Sensorelement benötigt Filter oder optische Gitter, um eine Rückstreuung des Anregungslichtes in die photosensitiven Elemente zu vermeiden. Durch die Verwendung unterschiedlicher Indikatorsubstanzen für einzelne photosensitive Elemente können gleichzeitig mehrere unterschiedliche Probenbestandteile vermessen werden.

Weiters ist aus M.J.P. LEINER, Sensors and Actuators B29 (1995) 169 - 173 unter dem Titel "Optical sensors for in vitro blood gas analysis" eine Meßkammer zur gleichzeitigen Messung von pH, PCO₂ und PO₂ im Blut bekannt geworden, wobei die Meßkammer als Durchflußmeßzelle ausgebildet ist. Diese besteht im wesentlichen aus zwei Spritzgussteilen aus einem für die Anregungs- und Meßstrahlung der verwendeten lumineszenzoptischen Sensoren transparenten Plastikmaterial. An den stirnseitigen Enden der Meßzelle sind Anschlüsse für den Probenzu- bzw. Probenablauf angeformt. Der Basisteil der Meßkammer weist in einem Sensorbereich drei zylindrische Vertiefungen zur Aufnahme der Sensorelemente auf. Im Deckteil der Meßkammer befindet sich eine nutförmige Vertiefung, welche zusammen mit dem Basisteil den Meßkanal bildet, welcher in etwa 40 µl Probenvolumen aufweist. Die Anregung des Lumineszenzindikators in den einzelnen lumineszenzoptischen Sensorelementen, sowie die Detektion der Lumineszenzstrahlung erfolgt über Lichtleiter, welche auf den Basisteil der Messkammer gerichtet sind.

Aufgabe der vorliegenden Erfindung ist es, ausgehend vom genannten Stand der Technik eine Meßanordnung vorzuschlagen, welche einfach und billig herzustellen ist, wobei ohne Verwendung von Filtern und optischen Gittern im Trägerelement gleichzeitig mehrere unterschiedliche Probenbestandteile vermessen werden können. Eine weitere Forderung besteht darin, das Trägerelement der Meßanordnung als Einwegelement auszubilden.

Diese Aufgabe wird erfindungsgemäß dadurch gelöst, daß gemäß einer ersten Ausführungsvariante auf der ersten Grenzfläche zumindest ein weiteres, vorzugsweise vom ersten unterschiedliches, durch einen gemeinsamen Probenkanal verbundenes, lumineszenzoptisches Sensorelement angeordnet ist, daß jedem Sensorelement eine separate Strahlungsquelle sowie allen Sensorelementen ein gemeinsamer Detektor zugeordnet ist, sowie daß eine elektronische Steuereinrichtungen vorgesehen ist, mit welcher die separaten Strahlungsquellen zu einer zeitlich versetzten Abgabe der Anregungsstrahlung verbunden sind (Multiplexverfahren), so daß die Trennung der Lichtwege der Meßstrahlung jedes Sensorelementes durch zeitlich versetzte Anregung der Sensorelemente erfolg.

Vorteilhafterweise wird somit nicht nur die Anregungsstrahlung durch unterschiedliche optische Lichtwege von der Meßstrahlung sondern auch die von den einzelnen Sensorelementen jeweils emittierte Meßstrahlung durch im folgenden näher beschriebene elektronische und/oder mathematische Vorrichtung bzw. Verfahren separiert. Durch diese Maßnahme kann auf optische Filter oder optische Gitterstrukturen im Trägerelement verzichtet werden.

In den beiden folgenden vorteilhaften Ausgestaltung der Erfindung ist jedem Sensorelement eine separate Strahlungsquelle sowie allen Sensorelementen ein gemeinsamer Detektor zugeordnet sein.

Eine Ausführungsvariante zeichnet sich dadurch aus, daß eine elektronische Einrichtung zur periodischen Modulation der Anregungsstrahlung, welche mit den separaten Strahlungsquellen verbunden ist, eine Einrichtung zur periodisch modulierten Erfassung der Meßstrahlung, welche mit dem Detektor verbunden ist sowie eine Einrichtung zur Messung des Phasenwinkels und/oder der Demodulation zwischen Anregungs- und Meßstrahlung, vorgesehen ist. Die Abklingzeit bzw. deren Änderung kann somit auch aus der Demodulation, d. h. der Reduktion der Amplitude der Meßstrahlung gegenüber der Anregungsstrahlung, gewonnen werden.

Eine gepulste Anregung mit nachfolgender Abklingzeitmessung kann in jenen Fällen vorteilhaft angewandt werden, wo jedem Sensorelement eine separate Strahlungsquelle zugeordnet ist. Eine derartige Ausführungsvariante ist dadurch gekennzeichnet, daß eine Einrichtung zur gepulsten Anregung der Sensorelemente, welche mit den separaten Strahlungsquellen verbunden ist, sowie eine Einrichtung zur zeitaufgelösten Erfassung der Meßstrahlung, welche mit dem Detektor in Verbindung steht, vorgesehen ist.

Weiters ist in einer erfindungsgemäßen Variante vorgesehen, daß alle Sensorelemente mit einer gemeinsamen, gepulsten Strahlungsquelle sowie mit einem gemeinsamen Detektor in optischer Verbindung stehen, wobei der Detektor zur Trennung der Lichtwege der Meßstrahlung jedes Sensorelementes mit einer Einrichtung zur zeitlich versetzten Detektierung der Meßstrahlung verbunden ist. Die Trennung der Lichtwege kann auch durch eine nachgeschaltete Einheit zur mathematischen Auftrennung der Abklingzeitfunktionen der einzelnen Sensorelemente erfolgen. In dieser einfachen Ausführungsvariante kann für mehrere Sensorelemente eine Strahlungsquelle sowie ein gemeinsamer Detektor verwendet werden.

Weiters kann bei Ausführungsvarianten, wo alle Sensorelemente mit einem gemeinsamen Detektor in optischer Verbindung stehen, dieser Detektor auch die Abklingzeitprofile aller Sensorelemente gleichzeitig erfassen, wobei dann die Auswerteeinrichtung eine Einheit zur mathematischen Auftrennung der Abklingzeitfünktionen der einzelnen Sensorelemente aufweist. Bei dieser Ausführungsvariante ist jedoch die Zahl der Sensorelemente beschränkt und davon abhängig, inwieweit die mittleren Zeitkonstanten der Abklingzeiten der einzelnen Sensorelemente unterschiedlich sind. Gute Meßergebnisse können dann erzielt werden, wenn sich die mittleren Zeitkonstanten der Abklingzeiten zumindest um einen Faktor zwei unterscheiden.

Das Trägerelement kann für eine Lichtleitung zwischen den Sensorelementen und dem Detektor bzw. den Detektoren mittels Totalreflexion geeignet sein. Es sind jedoch auch Ausführungsvarianten denkbar, wo zusätzlich auch die Anregungsstrahlung zwischen Lichtquelle und den Sensorelementen mittels Totalreflexion im Trägerelement geführt wird.

Das Trägerelement kann in allen Ausführungsvarianten samt Sensorelementen und Probenkanal als kostengünstiges Einwegelement ausgebildet sein, dessen Grenzflächen nach dem Einlegen in ein Meßgerät als Kontaktflächen für die im Meßgerät angeordneten Strahlungsquellen bzw. Detektoren dienen.

Die Erfindung wird im folgenden anhand von schematischen Darstellungen näher erläutert. Es zeigen die Fig. 1a bis 1c erfindungsgemäße Meßanordnungen mit jeweils gleichem Trägerelement und unterschiedlichen Anregungs- und Detektionseinrichtungen, sowie die Fig. 2 und 3 weitere vorteilhafte Ausführungsvarianten der Erfindung.

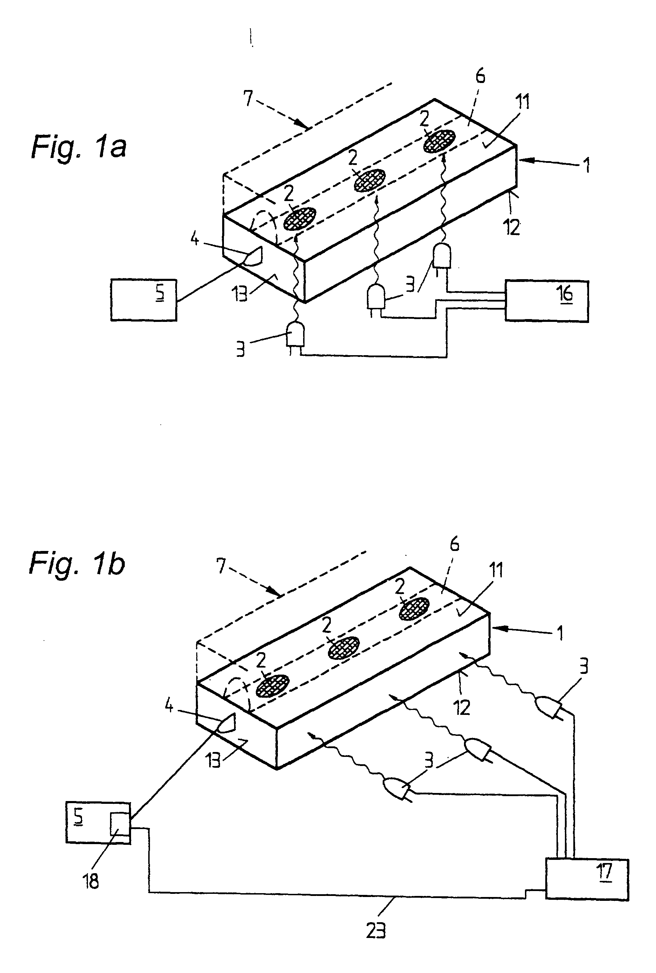

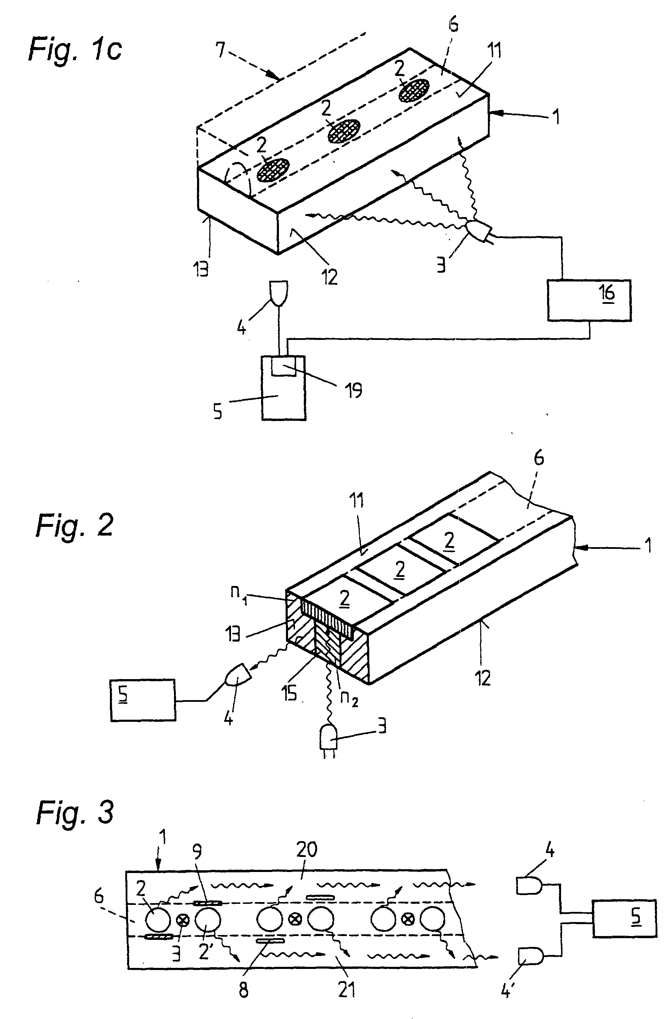

Alle in den Fig. 1 bis 3 dargestellten Ausführungsvarianten der erfindungsgemäßen Meßanordnung weisen ein für die verwendete Anregungs- und Meßstrahlung transparentes Trägerelement 1 auf, wobei eine Grenzfläche 11 die lumineszenzoptischen Sensorelemente 2, 2' aufnimmt, durch die Grenzfläche 12 die Anregungsstrahlung eingestrahlt und durch die Grenzfläche 13 die Meßstrahlung abgegeben wird. Die Grenzfläche 12 ist daher der bzw. den Lichtquellen 3 und die Grenzfläche 13 der bzw. den Detektoren 4, 4' zugeordnet. Die Signale der Detektoren 4, 4' werden einer Auswerteeinheit 5 zugeführt. Die Richtung der Anregungsstrahlung steht im wesentlichen normal auf die Detektionsrichtung, wobei jedoch auch Winkel von 60 bis 120° zulässig sind. Alle Sensorelemente 2, welche vorzugsweise unterschiedliche Indikatormaterialien zur Messung unterschiedlicher Parameter aufweisen, sind durch einen gemeinsamen Probenkanal 6 verbunden. Der kapillare Probenkanal 6 sowie dessen Gehäusestruktur 7 sind nur schematisch angedeutet. Der Probenkanal kann einen quadratischen, rechteckigen oder im wesentlichen halbkreisförmigen Querschnitt aufweisen, wobei auch Erweiterungen im Bereich der einzelnen Sensorelemente 2, 2' zulässig sind.

Die Ausführungen gemäß Fig. 1a bis Fig. 1c zeichnen sich durch ein sehr einfach gestaltetes Trägerelement 1 aus, welches beispielsweise quaderförmig ausgebildet sein kann. Auf einer der länglichen Grenzflächen 11 sind die einzelnen Sensorelemente 2 angeordnet, wobei jeweils durch die Grenzflächen 12 bzw. 13 die Anregungsstrahlung eingestrahlt bzw. die Meßstrahlung detektiert wird. Ein zweiter ähnlicher Bauteil bzw. Gehäuse 7, in welchem der Probenkanal 6 beispielsweise nutförmig eingelassen ist, kann mit dem Trägerelement 1 z. B. verklebt oder durch andere geeignete Mittel verbunden sein.

Die Ausführungsvariante Fig. 1a verfügt über separate Strahlungsquellen 3 für jedes der Sensorelemente 2 und einen stimseitig zugeordneten Detektor 4, wobei hier die Anregung über eine Einrichtung 16 zeitlich versetzt nach dem sogenannten Multiplexverfahren erfolgt. Gleichzeitige Messung im Zusammenhang mit der vorliegenden Erfindung bedeutet somit die Messung mehrerer Parameter im Rahmen einer Probenbeschickung des Probenkanals.

In Fig. 1b sind die einzelnen Strahlungsquellen einer Seitenfläche 12 des Trägerelementes zugeordnet, wobei die Anregung der einzelnen Sensorelemente entweder durch den evaneszenten Anteil der Anregungswelle oder durch geeignete Anpassung des Brechungsindex im Bereich der Sensorspots erfolgen kann. Bei dieser Ausführungsvariante wird die Anregungsstrahlung über die Einrichtung 17 periodisch moduliert, wobei über die Einrichtung 18 eine periodisch modulierte Erfassung der Meßstrahlung erfolgt. Die Einrichtungen 17 und 18 sind mit einer Signalleitung 23 verbunden, sodaß in der Auswerteeinheit die Messung des Phasenwinkels und/oder der Demodulation zwischen Anregungs- und Meßstrahlung erfolgen kann.

Schließlich zeigt Fig. 1c eine Ausführungsvariante, bei der allen Sensorelementen 2 eine gemeinsame, gepulste Strahlungsquelle 3 sowie ein gemeinsamer Detektor 4 zugeordnet ist. Nach der gemeinsamen, gepulsten Anregung aller Sensorelemente 2 erfolgt die Detektierung durch zeitlich versetzte Meßpunkte bzw. Meßfenster. Bei dieser Variante sollte jedoch die mittlere Zeitkonstante der Abklingzeit der einzelnen Sensorelemente signifikant unterschiedlich sein. Dem Detektor 4 kann eine Einrichtung 19 zur mathematischen Auftrennung der Abklingzeitfunktionen der einzelnen Sensorelemente nachgeschaltet sein.

Eine Variante der Ausführungen nach Fig. 1a bis 1c wird in Fig. 2 dargestellt. Das Trägerelement 1 weist im Bereich der Sensorelemente 2 abgegrenzte Bereiche 15 auf, deren Brechungsindex n₂ größer ist als der Brechungsindex n₁ des eigentlichen Trägerelementes. Über die Bereiche 15 mit dem größeren Brechungsindex n₂ kann die Zufuhr der Anregungsstrahlung direkt und/oder mittels Totalreflexion erfolgen. Die in alle Raumrichtungen emittierte Fluoreszenzstrahlung gelangt unter anderem in die seitlichen Bereiche des Trägerelementes 1 und wird dort direkt und/oder mittels Totalreflexion an eine der beiden Stirnflächen 13 abgeleitet und vom Detektor 4 erfaßt.

Eine sehr kompakte Ausführungsvariante wird in Fig. 3 dargestellt. Hier werden jeweils zwei Sensorelemente 2, 2' zu Zweiergruppen zusammengefaßt, wobei jeder dieser Gruppen eine separate Strahlungsquelle 3 zugeordnet ist. Auf diese Art können in einer kompakten Bauform, beispielsweise bis zu acht unterschiedliche Sensorelemente, durch bis zu vier Leuchtdioden angeregt werden. Jedem ersten Sensorelement 2 einer Zweiergruppe ist über einen ersten Lichtweg 20 im Trägerelement 1 ein erster Detektor 4 zugeordnet, und jedem zweiten Sensorelement 2' über einen zweiten Lichtweg 21 ein zweiter Detektor 4'. Ausnehmungen 8 oder lichtundurchlässige Schichten 9 können zur Sperrung des jeweiligen anderen Lichtweges verwendet werden. Die Trennung der Lichtwege unterschiedlicher Zweiergruppen von Sensorelementen 2, 2' kann durch zeitlich versetzte Anregung der einzelnen Zweiergruppen aber auch beispielsweise durch modulierte Anregung und Detektion erfolgen.

## Patentansprüche

1. Meßanordnung mit zumindest einer Strahlungsquelle (3) zur Bereitstellung einer Anregungsstrahlung, mit einem ersten lumineszenzoptischen Sensorelement (2), mit zumindest einem Detektor (4), einer Auswerteeinheit (5) zur Detektion einer Meßstrahlung und einem für die Anregungs- und die Meßstrahlung transparenten Trägerelement (1), welches eine erste Grenzfläche (11) zur Anbringung des lumineszenzoptischen Sensorelementes (2), eine zweite Grenzfläche (12) zur Aufnahme der Anregungsstrahlung sowie eine dritte Grenzfläche (13) zur Abgabe der Meßstrahlung des Sensorelementes (2) an den Detektor (4) aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex (n₁) des Trägerelementes größer ist, als jener der Umgebung, **dadurch gekennzeichnet,** daß auf der ersten Grenzfläche (11) zumindest ein weiteres, vorzugsweise vom ersten unterschiedliches, durch einen gemeinsamen Probenkanal (6) verbundenes, lumineszenzoptisches Sensorelement (2) angeordnet ist, daß jedem Sensorelement (2) eine separate Strahlungsquelle (3) sowie allen Sensorelementen (2) ein gemeinsamer Detektor (4) zugeordnet ist, sowie daß eine elektronische Steuereinrichtungen (16) vorgesehen ist, mit welcher die separaten Strahlungsquellen (3) zu einer zeitlich versetzten Abgabe der Anregungsstrahlung verbunden sind.

2. Meßanordnung mit zumindest einer Strahlungsquelle (3) zur Bereitstellung einer Anregungsstrahlung, mit einem ersten lumineszenzoptischen Sensorelement (2), mit zumindest einem Detektor (4), einer Auswerteeinheit (5) zur Detektion einer Meßstrahlung und einem für die Anregungs- und die Meßstrahlung transparenten Trägerelement(1), welches eine erste Grenzfläche (11) zur Anbringung des lumineszenzoptischen Sensorelementes (2), eine zweite Grenzfläche (12) zur Aufnahme der Anregungsstrahlung sowie eine dritte Grenzfläche (13) zur Abgabe der Meßstrahlung des Sensorelementes (2) an den Detektor (4) aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex (n₁) des Trägerelementes größer ist, als jener der Umgebung, **dadurch gekennzeichnet,** daß auf der ersten Grenzfläche (11) zumindest ein weiteres, vorzugsweise vom ersten unterschiedliches, durch einen gemeinsamen Probenkanal (6) verbundenes, lumineszenzoptisches Sensorelement (2) angeordnet ist, daß jedem Sensorelement (2) eine separate Strahlungsquelle (3) sowie allen Sensorelementen (2) ein gemeinsamer Detektor (4) zugeordnet ist, sowie daß eine elektronische Einrichtung (17) zur periodischen Modulation der Anregungsstrahlung, welche mit den separaten Strahlungsquellen (3) verbunden ist, eine Einrichtung (18) zur periodisch modulierten Erfassung der Meßstrahlung, welche mit dem Detektor (4) verbunden ist sowie eine Einrichtung zur Messung des Phasenwinkels und/oder der Demodulation zwischen Anregungs- und Meßstrahlung, vorgesehen ist.

3. Meßanordnung mit zumindest einer Strahlungsquelle (3) zur Bereitstellung einer Anregungsstrahlung, mit einem ersten lumineszenzoptischen Sensorelement (2), mit zumindest einem Detektor (4), einer Auswerteeinheit (5) zur Detektion einer Meßstrahlung und einem für die Anregungs- und die Meßstrahlung transparenten Trägerelement (1), welches eine erste Grenzfläche (11) zur Anbringung des lumineszenzoptischen Sensorelementes (2), eine zweite Grenzfläche (12) zur Aufnahme der Anregungsstrahlung sowie eine dritte Grenzfläche (13) zur Abgabe der Meßstrahlung des Sensorelementes (2) an den Detektor (4) aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex (n₁) des Trägerelementes größer ist, als jener der Umgebung, **dadurch gekennzeichnet,** daß auf der ersten Grenzfläche (11) zumindest ein weiteres, vorzugsweise vom ersten unterschiedliches, durch einen gemeinsamen Probenkanal (6) verbundenes, lumineszenzoptisches Sensorelement (2) angeordnet ist, daß jedem Sensorelement (2) eine separate Strahlungsquelle (3) sowie allen Sensorelementen (2) ein gemeinsamer Detektor (4) zugeordnet ist, sowie daß eine Einrichtung zur gepulsten Anregung der Sensorelemente (2), welche mit den separaten Strahlungsquellen (3) verbunden ist, sowie eine Einrichtung zur zeitaufgelösten Erfassung der Meßstrahlung, welche mit dem Detektor (4) in Verbindung steht, vorgesehen ist.

4. Meßanordnung nach einem der Ansprüche 1 bis 3, **dadurch gekennzeichnet,** daß das Trägerelement (1) im Bereich jedes Sensorelementes (2) abgegrenzte Bereiche (15) aufweist, deren Brechungsindex (n₂) größer ist als der Brechungsindex (n₁) des Trägerelementes (1) außerhalb dieser Bereiche, wobei die Bereiche (15) mit Brechungsindex (n₂) zur Zufuhr der Anregungsstrahlung und die übrigen Bereiche des Trägerelementes (1) mit Brechungsindex (n₁) zur Abfuhr der Meßstrahlung dienen.

5. Meßanordnung mit zumindest einer Strahlungsquelle (3) zur Bereitstellung einer Anregungsstrahlung, mit einem ersten lumineszenzoptischen Sensorelement (2), mit zumindest einem Detektor (4), einer Auswerteeinheit (5) zur Detektion einer Meßstrahlung und einem für die Anregungs- und die Meßstrahlung transparenten Trägerelement (1), welches eine erste Grenzfläche (11) zur Anbringung des lumineszenzoptischen Sensorelementes (2), eine zweite Grenzfläche (12) zur Aufnahme der Anregungsstrahlung sowie eine dritte Grenzfläche (13) zur Abgabe der Meßstrahlung des Sensorelementes (2) an den Detektor (4) aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex (n₁) des Trägerelementes größer ist, als jener der Umgebung, **dadurch gekennzeichnet,** daß auf der ersten Grenzfläche (11) zumindest ein weiteres, vorzugsweise vom ersten unterschiedliches, durch einen gemeinsamen Probenkanal (6) verbundenes, lumineszenzoptisches Sensorelement (2) angeordnet ist, daß eine gemeinsame, gepulste Strahlungsquelle (3) für alle Sensorelemente (2) sowie eine Einrichtung zur zeitlich versetzten Detektierung der Meßstrahlung vorgesehen ist, wobei alle Sensorelemente (2) mit einem gemeinsamen Detektor (4) in optischer Verbindung stehen.

6. Meßanordnung mit zumindest einer Strahlungsquelle (3) zur Bereitstellung einer Anregungsstrahlung, mit einem ersten lumineszenzoptischen Sensorelement (2), mit zumindest einem Detektor (4), einer Auswerteeinheit (5) zur Detektion einer Meßstrahlung und einem für die Anregungs- und die Meßstrahlung transparenten Trägerelement (1), welches eine erste Grenzfläche (11) zur Anbringung des lumineszenzoptischen Sensorelementes (2), eine zweite Grenzfläche (12) zur Aufnahme der Anregungsstrahlung sowie eine dritte Grenzfläche (13) zur Abgabe der Meßstrahlung des Sensorelementes (2) an den Detektor (4) aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex (n₁) des Trägerelementes größer ist, als jener der Umgebung, **dadurch gekennzeichnet,** daß auf der ersten Grenzfläche (11) zumindest ein weiteres, vorzugsweise vom ersten unterschiedliches, durch einen gemeinsamen Probenkanal (6) verbundenes, lumineszenzoptisches Sensorelement (2) angeordnet ist, daß der Detektor (4) eine Einrichtung zur gleichzeitigen Erfassung der Abklingzeitprofile aller Sensorelemente (2) sowie die Auswerteeinheit (5) eine Einheit (19) zur mathematischen Auftrennung der Abklingzeitfunktionen der einzelnen Sensorelemente (2) aufweist, wobei alle Sensorelemente (2) mit einem gemeinsamen Detektor (4) in optischer Verbindung stehen.

7. Meßanordnung mit zumindest einer Strahlungsquelle (3) zur Bereitstellung einer Anregungsstrahlung, mit einem ersten lumineszenzoptischen Sensorelement (2), mit zumindest einem Detektor (4), einer Auswerteeinheit (5) zur Detektion einer Meßstrahlung und einem für die Anregungs- und die Meßstrahlung transparenten Trägerelement (1), welches eine erste Grenzfläche (11) zur Anbringung des lumineszenzoptischen Sensorelementes (2), eine zweite Grenzfläche (12) zur Aufnahme der Anregungsstrahlung sowie eine dritte Grenzfläche (13) zur Abgabe der Meßstrahlung des Sensorelementes (2) an den Detektor (4) aufweist, wobei die Richtung der Anregungsstrahlung mit der Detektionsrichtung einen Winkel zwischen 60° und 120°, vorzugsweise einen Winkel von im wesentlichen 90°, einschließt und der Brechungsindex (n₁) des Trägerelementes größer ist, als jener der Umgebung, **dadurch gekennzeichnet,** daß auf der ersten Grenzfläche (11) zumindest ein weiteres, vorzugsweise vom ersten unterschiedliches, durch einen gemeinsamen Probenkanal (6) verbundenes, lumineszenzoptisches Sensorelement (2, 2') angeordnet ist, daß die Sensorelemente (2, 2') zu Zweiergruppen zusammengefaßt sind, wobei jeder dieser Gruppen eine separate Strahlungsquelle (3) zugeordnet ist, daß die Auswerteeinheit (5) mit zwei Detektoren (4, 4') verbunden ist, wobei jedem ersten Sensorelement (2) einer Zweiergruppe über einen ersten Lichtweg (20) im Trägerelement (1) ein erster Detektor (4) und jedem zweiten Sensorelement (2') über einen zweiten Lichtweg (21) im Trägerelement (1) ein zweiter Detektor (4') zugeordnet ist, sowie daß eine Einrichtung zur zeitlich versetzten Anregung der Zweiergruppen vorgesehen ist.

## Claims

1. Measuring device comprising at least one radiation source 3 for the supplying of excitation radiation, and a first luminescence-optical sensor element 2, and at least one detector 4 and an evaluation unit 5 for the detection of measurement radiation, and a supporting element 1 transparent to excitation and measurement radiation, which has a first boundary face 11 holding the luminescence-optical sensor element 2, and a second boundary face 12 picking up the excitation radiation, and a third boundary face 13 transmitting the measurement radiation of the sensor element 2 to the detector 4, the direction of the excitation radiation forming an angle of 60° to 120°, and preferably an angle of essentially 90°, with the direction of detection, and the refractive index n₁ of the supporting element being greater than that of the environment, **characterised in that** on the first boundary face 11 is located at least one further luminescence-optical sensor element 2, which preferably differs from the first sensor element and is connected thereto by a common sample channel 6, and that each sensor element 2 is assigned a separate radiation source 3 and all sensor elements 2 are assigned one common detector 4, and further that an electronic control means 16 is provided to which the separate radiation sources 3 are connected in order to permit the time-sequenced emission of excitation radiation.

2. Measuring device comprising at least one radiation source 3 for the supplying of excitation radiation, and a first luminescence-optical sensor element 2, and at least one detector 4 and an evaluation unit 5 for the detection of measurement radiation, and a supporting element 1 transparent to excitation and measurement radiation, which has a first boundary face 11 holding the luminescence-optical sensor element 2, and a second boundary face 12 picking up the excitation radiation, and a third boundary face 13 transmitting the measurement radiation of the sensor element 2 to the detector 4, the direction of the excitation radiation forming an angle of 60° to 120°, and preferably an angle of essentially 90°, with the direction of detection, and the refractive index n₁ of the supporting element being greater than that of the environment, **characterised in that** on the first boundary face 11 is located at least one further luminescence-optical sensor element 2, which preferably differs from the first sensor element and is connected thereto by a common sample channel 6, and that each sensor element 2 is assigned a separate radiation source 3 and all sensor elements 2 are assigned one common detector 4, and further that an electronic means 17 is provided for periodic modulation of the excitation radiation, which is connected to the separate radiation sources 3, and that the detector 4 is connected to a device 18 for periodically modulated detection of the measurement radiation, and further that a device is provided for measuring the phase angle and/or the demodulation between excitation and measurement radiation.

3. Measuring device comprising at least one radiation source 3 for the supplying of excitation radiation, and a first luminescence-optical sensor element 2, and at least one detector 4 and an evaluation unit 5 for the detection of measurement radiation, and a supporting element 1 transparent to excitation and measurement radiation, which has a first boundary face 11 holding the luminescence-optical sensor element 2, and a second boundary face 12 picking up the excitation radiation, and a third boundary face 13 delivering the measurement radiation of the sensor element 2 to the detector 4, the direction of the excitation radiation forming an angle of 60° to 120°, and preferably an angle of essentially 90°, with the direction of detection, and the refractive index n₁ of the supporting element being greater than that of the environment, **characterised in that** on the first boundary face 11 is located at least one further luminescence-optical sensor element 2, which preferably differs from the first sensor element and is connected thereto by a common sample channel 6, and that each sensor element 2 is assigned a separate radiation source 3 and all sensor elements 2 are assigned one common detector 4, and further that a device is provided for pulsed excitation of the sensor elements 2, which is connected to the separate radiation sources 3, and further a device for time-resolved detection of the measurement radiation, which is connected to the detector 4.

4. Measuring device according to any of claims 1 to 3, **characterised in that** the supporting element 1 features delimited regions 15 in the area of each sensor element 2, whose refractive index n₂ is greater than the refractive index n₁ of the supporting element 1 outside of said regions, the regions 15 with refractive index n₂ being used to feed in excitation radiation, and the remaining regions of the supporting element 1 with refractive index n₁ to carry off measurement radiation.

5. Measuring device comprising at least one radiation source 3 for the supplying of excitation radiation, and a first luminescence-optical sensor element 2, and at least one detector 4 and an evaluation unit 5 for the detection of measurement radiation, and a supporting element 1 transparent to excitation and measurement radiation, which has a first boundary face 11 holding the luminescence-optical sensor element 2, and a second boundary face 12 picking up the excitation radiation, and a third boundary face 13 delivering the measurement radiation of the sensor element 2 to the detector 4, the direction of the excitation radiation forming an angle of 60° to 120°, and preferably an angle of essentially 90°, with the direction of detection, and the refractive index n₁ of the supporting element being greater than that of the environment, **characterised in that** on the first boundary face 11 is located at least one further luminescence-optical sensor element 2, which preferably differs from the first sensor element and is connected thereto by a common sample channel 6, and that one common, pulsed radiation source 3 is provided for all sensor elements 2 as well as a device for time-sequenced detection of the measurement radiation, all sensor elements 2 being optically connected to a common detector 4.

6. Measuring device comprising at least one radiation source 3 for the supplying of excitation radiation, and a first luminescence-optical sensor element 2, and at least one detector 4 and an evaluation unit 5 for the detection of measurement radiation, and a supporting element 1 transparent to excitation and measurement radiation, which has a first boundary face 11 holding the luminescence-optical sensor element 2, and a second boundary face 12 picking up the excitation radiation, and a third boundary face 13 delivering the measurement radiation of the sensor element 2 to the detector 4, the direction of the excitation radiation forming an angle of 60° to 120°, and preferably an angle of essentially 90°, with the direction of detection, and the refractive index n₁ of the supporting element being greater than that of the environment, **characterised in that** on the first boundary face 11 is located at least one further luminescence-optical sensor element 2, which preferably differs from the first sensor element and is connected thereto by a common sample channel 6, and that the detector 4 includes a device for simultaneous recording of the decay time profiles of all sensor elements 2, and the evaluation unit 5 includes a subunit 19 for mathematical splitting of the decay time functions of the individual sensor elements 2, all sensor elements 2 being optically connected to one common detector 4.

7. Measuring device comprising at least one radiation source 3 for the supplying of excitation radiation, and a first luminescence-optical sensor element 2, and at least one detector 4 and an evaluation unit 5 for the detection of measurement radiation, and a supporting element 1 transparent to excitation and measurement radiation, which has a first boundary face 11 holding the luminescence-optical sensor element 2, and a second boundary face 12 picking up the excitation radiation, and a third boundary face 13 delivering the measurement radiation of the sensor element 2 to the detector 4, the direction of the excitation radiation forming an angle of 60° to 120°, and preferably an angle of essentially 90°, with the direction of detection, and the refractive index n₁ of the supporting element being greater than that of the environment, **characterised in that** on the first boundary face 11 is located at least one further luminescence-optical sensor element 2,2', which preferably differs from the first sensor element and is connected thereto by a common sample channel 6, and that the sensor elements 2,2' are combined into pairs, each pair being assigned a separate radiation source 3, and that the evaluation unit 5 is connected to two detectors 4, 4', each first sensor element 2 of a pair being assigned a first detector 4 via a first light path 20 in the supporting element 1, and each second sensor element 2' being assigned a second detector 4' via a second light path 21 in the supporting element 1, and that a device is provided for the purpose of time-sequenced excitation of the individual pairs.

## Revendications

1. Dispositif de mesure avec au moins une source lumineuse (3) pour fournir un rayonnement d'excitation, au moins un premier élément capteur optique luminescent (2), au moins un détecteur (4), une unité de mesure (5) pour détecter un rayonnement de mesure et un élément de support (1) transparent au rayonnement d'excitation et de mesure, qui a une première surface limite (11) pour recevoir l'élément capteur optique luminescent (2), une seconde surface limite (12) pour recevoir le rayonnement d'excitation, ainsi qu'une troisième surface limite (13) pour la transmission du rayonnement de mesure de l'élément capteur (2) vers le détecteur (4), où la direction du rayonnement d'excitation forme avec la direction de détection un angle entre 60° et 120 ° et, de préférence, un angle sensiblement égal à 90° et où l'indice de réfraction (n₁) de l'élément de support est supérieur à celui de l'environnement, **caractérisé en ce que** sur la première surface limite (11), il y a au moins un autre élément capteur optique luminescent (2), qui est, de préférence, différent du premier et qui est en communication avec lui via un canal commun (6) pour l'échantillon, en ce que chaque élément capteur (2) a une source de rayonnement séparée (3), en ce que tous les éléments capteurs (2) ont un détecteur commun (4) et en ce qu'un dispositif de commande électronique (16) est prévu, avec lequel les sources lumineuses séparées (3) sont connectées, pour assurer une émission du rayonnement d'excitation qui est permutée dans le temps.

2. Dispositif de mesure avec au moins une source lumineuse (3) pour fournir un rayonnement d'excitation, au moins un premier élément capteur optique luminescent (2), au moins un détecteur (4), une unité de mesure (5) pour détecter un rayonnement de mesure et un élément de support (1) transparent au rayonnement d'excitation et de mesure, qui a une première surface limite (11) pour recevoir l'élément capteur optique luminescent (2), une seconde surface limite (12) pour recevoir le rayonnement d'excitation, ainsi qu'une troisième surface limite (13) pour la transmission du rayonnement de mesure de l'élément capteur (2) vers le détecteur (4), où la direction du rayonnement d'excitation forme avec la direction de détection un angle entre 60 ° et 120 ° et, de préférence, un angle sensiblement égal à 90 ° et où l'indice de réfraction (n₁) de l'élément de support est supérieur à celui de l'environnement, **caractérisé en ce que** sur la première surface limite (11), il y a au moins un autre élément capteur optique luminescent (2), qui est, de préférence, différent du premier et qui est en communication avec lui via un canal commun (6) pour l'échantillon, en ce que chaque élément capteur (2) a une source de rayonnement séparée (3), en ce que tous les éléments capteurs (2) ont un détecteur commun (4) et en ce qu'on prévoit un dispositif de commande électronique (17) qui assure une modulation périodique du rayonnement d'excitation, et qui est connecté avec les sources lumineuses séparées (3), un dispositif (18) qui assure une modulation périodique de la saisie des rayonnements de mesure et qui est connecté au détecteur (4), ainsi qu'un dispositif pour mesurer le déphasage et / ou la démodulation entre le rayonnement d'excitation et le rayonnement de mesure.

3. Dispositif de mesure avec au moins une source lumineuse (3) pour fournir un rayonnement d'excitation, au moins un premier élément capteur optique luminescent (2), au moins un détecteur (4), une unité de mesure (5) pour détecter un rayonnement de mesure et un élément de support (1) transparent au rayonnement d'excitation et de mesure, qui a une première surface limite (11) pour recevoir l'élément capteur optique luminescent (2), une seconde surface limite (12) pour recevoir le rayonnement d'excitation, ainsi qu'une troisième surface limite (13) pour la transmission du rayonnement de mesure de l'élément capteur (2) vers le détecteur (4), où la direction du rayonnement d'excitation forme avec la direction de détection un angle entre 60 ° et 120 ° et, de préférence, un angle sensiblement égal à 90 ° et où l'indice de réfraction (n₁) de l'élément de support est supérieur à celui de l'environnement, **caractérisé en ce que** sur la première surface limite (11), il y a au moins un autre élément capteur optique luminescent (2), qui est, de préférence, différent du premier et qui est en communication avec lui via un canal commun (6) pour l'échantillon, en ce que chaque élément capteur (2) a une source de rayonnement séparée (3), en ce que tous les éléments capteurs (2) ont un détecteur commun (4) et en ce qu'on prévoit un dispositif qui assure l'excitation pulsée des éléments capteurs (2) et qui est connecté avec les sources lumineuses séparées (3), ainsi qu'un dispositif de saisie programmé dans le temps du rayonnement de mesure qui est connecté avec le détecteur (4).

4. Dispositif de mesure selon l'une des revendications 1 à 3, **caractérisé en ce que** l'élément de support (1) au voisinage de chaque élément capteur (2) présente une région délimitée (15) dont l'indice de réfraction (n₂) est supérieur à l'indice de réfraction (n₁) de l'élément de support (1) à l'extérieur de cette région, en ce que la région (15) avec l'indice de réfraction plus élevé (n₂) sert à amener le rayonnement d'excitation et la région restante de l'élément de support (1) avec l'indice de réfraction (n₁) sert à émettre le rayonnement de mesure.

5. Dispositif de mesure avec au moins une source lumineuse (3) pour fournir un rayonnement d'excitation, au moins un premier élément capteur optique luminescent (2), au moins un détecteur (4), une unité de mesure (5) pour détecter un rayonnement de mesure et un élément de support (1) transparent au rayonnement d'excitation et de mesure, qui a une première surface limite (11) pour recevoir l'élément capteur optique luminescent (2), une seconde surface limite (12) pour recevoir le rayonnement d'excitation, ainsi qu'une troisième surface limite (13) pour la transmission du rayonnement de mesure de l'élément capteur (2) vers le détecteur (4), où la direction du rayonnement d'excitation forme avec la direction de détection un angle entre 60 ° et 120 ° et, de préférence, un angle sensiblement égal à 90 ° et où l'indice de réfraction (n₁) de l'élément de support est supérieur à celui de l'environnement, **caractérisé en ce que** sur la première surface limite (11), il y a au moins un autre élément capteur optique luminescent (2), qui est, de préférence, différent du premier et qui est en communication avec lui via un canal commun (6) pour l'échantillon, en ce qu'on prévoit une source commune (3) de rayonnement pulsé pour tous les éléments capteurs (2), ainsi qu'un dispositif pour la détection permutée dans le temps des rayonnements de mesure, et en ce que tous les éléments capteurs (2) sont connectés optiquement avec un détecteur commun (4).

6. Dispositif de mesure avec au moins une source lumineuse (3) pour fournir un rayonnement d'excitation, au moins un premier élément capteur optique luminescent (2), au moins un détecteur (4), une unité de mesure (5) pour détecter un rayonnement de mesure et un élément de support (1) transparent au rayonnement d'excitation et de mesure, qui a une première surface limite (11) pour recevoir l'élément capteur optique luminescent (2), une seconde surface limite (12) pour recevoir le rayonnement d'excitation, ainsi qu'une troisième surface limite (13) pour la transmission du rayonnement de mesure de l'élément capteur (2) vers le détecteur (4), où la direction du rayonnement d'excitation forme avec la direction de détection un angle entre 60 ° et 120 ° et, de préférence, un angle sensiblement égal à 90 ° et où l'indice de réfraction (n₁) de l'élément de support est supérieur à celui de l'environnement, **caractérisé en ce que** sur la première surface limite (11), il y a au moins un autre élément capteur optique luminescent (2), qui est, de préférence, différent du premier et qui est en communication avec lui via un canal commun (6) pour l'échantillon, en ce que le détecteur (4) comprend un dispositif permettant une saisie simultanée du profil du retour à zéro de tous les éléments capteurs (2), en ce que l'unité de mesure (5) comprend une unité (19) effectuant une analyse mathématique de la courbe de retour à zéro des éléments capteurs individuels et en ce que tous les éléments capteurs (2) sont connectés optiquement à un détecteur commun (4).

7. Dispositif de mesure avec au moins une source lumineuse (3) pour fournir un rayonnement d'excitation, au moins un premier élément capteur optique luminescent (2), au moins un détecteur (4), une unité de mesure (5) pour détecter un rayonnement de mesure et un élément de support (1) transparent au rayonnement d'excitation et de mesure, qui a une première surface limite (11) pour recevoir l'élément capteur optique luminescent (2), une seconde surface limite (12) pour recevoir le rayonnement d'excitation, ainsi qu'une troisième surface limite (13) pour la transmission du rayonnement de mesure de l'élément capteur (2) vers le détecteur (4), où la direction du rayonnement d'excitation forme avec la direction de détection un angle entre 60 ° et 120 ° et, de préférence, un angle sensiblement égal à 90 ° et où l'indice de réfraction (n₁) de l'élément de support est supérieur à celui de l'environnement, **caractérisé en ce que** sur la première surface limite (11), il y a·au moins un autre élément capteur optique luminescent (2, 2'), qui est, de préférence, différent du premier et qui est en communication avec lui via un canal commun (6) pour l'échantillon, en ce que l'élément capteur (2, 2') est réalisé pour former deux groupes, en ce que chacun de ces groupes a une source d'excitation séparée (3), en ce que l'unité de mesure (5) est connectée à deux détecteurs (4, 4'), en ce que chaque premier élément capteur (2) des deux groupes est connecté par un premier trajet lumineux (20) dans l'élément de support (1) avec un premier détecteur (4) et chaque second élément capteur (2') est connecté par un second trajet lumineux (21) dans l'élément de support (1) avec un second détecteur (4') et en ce que l'on prévoit un dispositif pour permuter dans le temps l'excitation des deux groupes.
